# EUROPEAN PATENT SPECIFICATION

(11) **EP 4 379 390 B1**
(45) Date of publication and mention of the grant of the patent: **21.10.2026**
(21) Application number: 22849138.7
(22) Date of filing: 29.06.2022
(51) Int. Cl.: G01N 35/00

(54) **AUTOMATIC ANALYSIS DEVICE, AND GUIDANCE METHOD USED IN AUTOMATIC ANALYSIS DEVICE**
AUTOMATISCHE ANALYSEVORRICHTUNG UND FÜHRUNGSVERFAHREN FÜR DIE AUTOMATISCHE ANALYSEVORRICHTUNG
DISPOSITIF D'ANALYSE AUTOMATIQUE ET PROCÉDÉ DE GUIDAGE UTILISÉ DANS UN DISPOSITIF D'ANALYSE AUTOMATIQUE

(30) Priority: 29.07.2021 JP 2021123894
(43) Date of publication of application: 05.06.2024
(73) Proprietor: HITACHI HIGH-TECH CORPORATION, Tokyo 105-6409 (JP); F. Hoffmann-La Roche AG, 4070 Basel (CH); Roche Diagnostics GmbH, 68305 Mannheim (DE)
(72) Inventor: HASEGAWA Masaki, Tokyo 105-6409 (JP); FOESTER Elisabeth, 68305 Mannheim (DE); HINZ Daniela, 68305 Mannheim (DE); RUTZ Christoph, 68305 Mannheim (DE); SPEYER Julia, 68305 Mannheim (DE)
(74) Representative: Strehl & Partner mbB
(86) International application number: PCT/JP2022/026088
(87) International publication number: WO 2023/008069

(56) References cited:
- WO-A1-2020/217720
- WO-A1-2021/140741
- JP-A- 2010 139 485
- JP-A- 2010 256 345
- JP-A- 2010 276 375
- JP-A- 2014 163 855
- JP-A- 2020 101 465
- US-A1- 2008 014 118

## Description

### Technical Field

The present invention relates to an automatic analyzer and a guidance method in the automatic analyzer.

### Background Art

In automatic analyzers, one is known that executes user guidance by displaying, on a device GUI (Graphical User Interface), a link to a relevant document and a relevant page of a device electronic manual in which an operation procedure for a solution is described when an abnormality has occurred in a measurement unit at the time of analysis (refer to Patent Document 1).

### Prior Art Document

### Patent Document

Patent Document 1: JP-2016-053582-A

WO 2021/140741 A1 discloses an automatic analyzer with the features in the preamble of present claim 1.

### Summary of the Invention

### Problem to be Solved by the Invention

According to patent document 1, the timing when the guidance occurs and the contents thereof are oriented to only a releasing procedure when an abnormality of the measurement unit has occurred at the time of analysis. However, there is a problem that, when there is omission of execution in the user operation procedure required by the time analysis starts, the omission of execution is not found out until an abnormality occurs at the start of the analysis.

Thus, the present invention provides an automatic analyzer that can reduce omission of execution in the procedure of a user compared to the prior art and a guidance method in the automatic analyzer.

### Means for Solving the Problem

The scope of the present invention is defined in the appended claims and includes a plurality of means for solving the above-described problem.

### Advantages of the Invention

According to the present invention, omission of execution in the procedure of a user can be reduced compared to the prior art. Problems, configurations, and effects other than the above-described ones will be made apparent by the following description of examples.

### Brief Description of Drawings

[Fig. 1] Fig. 1 is an external view illustrating the front surface of an automatic analyzer according to Example 1.
[Fig. 2] Fig. 2 is an external view illustrating the upper surface of the automatic analyzer according to Example 1.
[Fig. 3] Fig. 3 is a top view schematically illustrating a configuration of the inside of the automatic analyzer according to Example 1.
[Fig. 4] Fig. 4 is a diagram illustrating a configuration of a waste and consumables screen which is an example of the guidance according to Example 1.
[Fig. 5] Fig. 5 is a diagram illustrating a configuration of a reagent registration screen which is an example of the guidance according to Example 1.
[Fig. 6] Fig. 6 is a diagram illustrating a configuration of a specimen and analysis request registration screen which is an example of the guidance according to Example 1.
[Fig. 7] Fig. 7 is a flow chart illustrating a procedure until the start of analysis according to Example 1.
[Fig. 8] Fig. 8 is a diagram illustrating a configuration of a pop-up area which is an example of the guidance according to Example 2.
[Fig. 9] Fig. 9 is a top view schematically illustrating a configuration of the inside of the automatic analyzer according to Example 3.

### Modes for Carrying Out the Invention

Automatic analyzers of examples and examples of a guidance method in the automatic analyzer will be described below with use of the drawings.

In the following examples, it goes without saying that constituent elements (including elementary steps and so forth) thereof are not necessarily indispensable except for the case in which an explicit statement is particularly made, the case in which the constituent element is obviously indispensable in principle, and so forth.

Furthermore, in the drawings used in the present specification, the same or corresponding constituent elements are given the same or similar numerals and repeated description is omitted regarding these constituent elements in some cases.

### <Example 1>

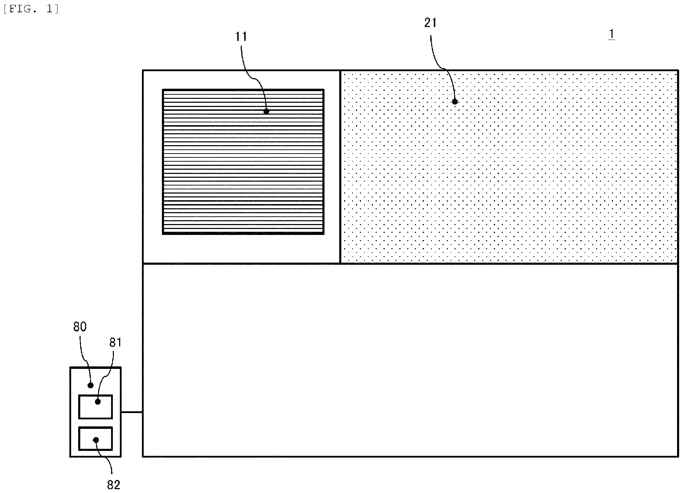

Example 1 of the automatic analyzer and the guidance method in the automatic analyzer will be described with use of FIG. 1 to FIG. 7.

First, the overall configuration of the automatic analyzer will be described with use of FIG. 1 to FIG. 3.

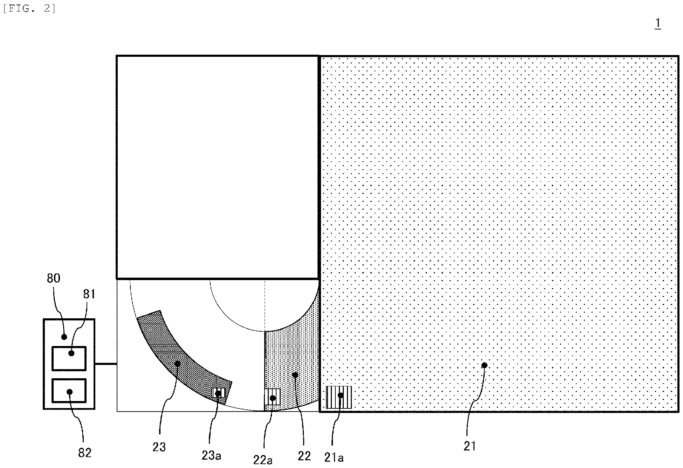

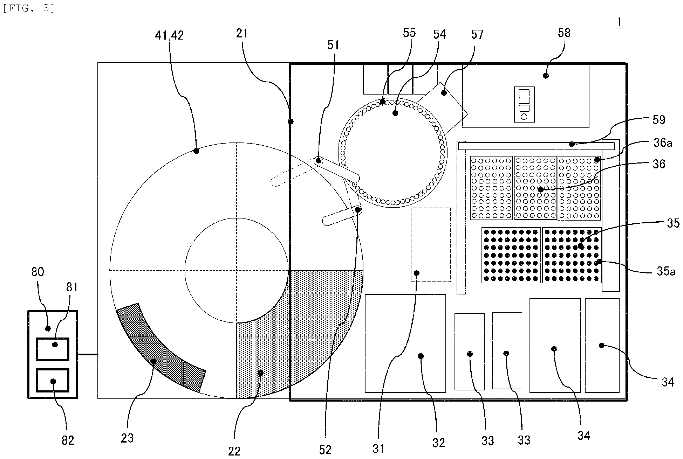

FIG. 1 is a diagram schematically illustrating a front view of the automatic analyzer. FIG. 2 is a diagram schematically illustrating a top view of the automatic analyzer. FIG. 3 is a diagram of the state in which a main cover 21 for protecting device mechanisms is removed in the top view of the automatic analyzer.

An automatic analyzer 1 illustrated FIG. 1 to FIG. 3 is a device for dispensing each of a sample and a reagent into a reaction vessel 36a and making the sample and the reagent react with each other to analyze the reacted liquid, and includes a sample disk 42, a sample dispensing mechanism 52, a reagent disk 41, a reagent dispensing mechanism 51, a reaction disk (incubator) 54, a waste container 31, a reaction vessel container 36, a first reaction vessel transport unit 59, an immunodetection unit 58, a biochemical detection unit 57, a control unit 80, a display unit 11, and so forth.

The sample disk 42 is made into a structure that can annularly hold a plurality of sample containers (illustration is omitted). The sample disk 42 rotates in sample dispensing and transports the sample container to an access position of the sample dispensing mechanism 52. In the present example, a form in which a user erects the sample container, where a sample to be made to react in the reaction vessel 36a is accommodated in the sample disk 42, by oneself is illustrated. However, the form in which a user erects the sample container by oneself does not need to be employed and a system in which the sample container is conveyed by using a conveying mechanism or the like may be employed.

The sample dispensing mechanism 52 is composed of a rotational drive mechanism, a vertical drive mechanism, and a replaceable dispensing tip, is moved among an assay tip container 35, a sample aspiration position, and a sample discharge position by the rotational drive mechanism and the vertical drive mechanism to mount a disposable tip 35a held in the assay tip container 35 on the tip thereof, and executes dispensing of a sample. The disposable tip 35a is discarded in the waste container 31. It is possible to employ a form in which a dispensing nozzle that can be reused through cleaning is used without using the disposable tip 35a.

The reagent disk 41 is a mechanism for holding a plurality of reagent containers (illustration is omitted) where a reagent to be made to react in the reaction vessel 36a is accommodated. The reagent disk 41 has a cold holding function for enhancing the on-board stability of reagent properties. The reagent disk 41 has a rotational drive mechanism and moves each reagent container to a predetermined position on a circumferential part by rotational motion.

The reagent dispensing mechanism 51 is composed of a rotational drive mechanism, a vertical drive mechanism, and a dispensing probe. The reagent dispensing mechanism 51 rotates and lowers to the position of a predetermined kind of reagent container on the reagent disk 41 and aspirates a predetermined amount of reagent. After the reagent aspiration, the reagent dispensing mechanism 51 rises. Next, the reagent dispensing mechanism 51 rotates to the upper side of the reaction vessel 36a, which is a reagent discharge destination, and lowers to discharge each reagent.

A magnetic particle stirring arm (illustration is omitted) (referred to also as stirrer) as stirring means is set over the reagent disk 41. This magnetic particle stirring arm moves to an upper area of the reagent container where a magnetic particle solution that should be stirred is put, and lowers a magnetic particle stirring element of the magnetic particle stirring arm to stir the magnetic particle solution by rotating this stirring element. In order to keep magnetic particles in the solution from naturally precipitating, the magnetic particle stirring arm stirs the magnetic particles immediately before the reagent is dispensed.

An immune analysis flow will be described below in the order of treatment.

The first reaction vessel transport unit 59 has a drive mechanism of X-axis, Y-axis, and Z-axis directions and a reaction vessel grasping mechanism, and moves on the upper side of the waste container 31, an incubator block (illustration is omitted), a reaction liquid stirring unit (illustration is omitted), and the reaction vessel container 36.

A second reaction vessel transport unit (illustration is omitted) has a rotational drive mechanism, a vertical drive mechanism, and a reaction vessel grasping mechanism, and has a function of moving the reaction vessel 36a to each reaction vessel setting position including the reaction liquid stirring unit, a sample discharge position, and the like that are disposed on a rotation trajectory.

The first reaction vessel transport unit 59 moves the reaction vessel 36a from the reaction vessel container 36 to the sample discharge position. The sample dispensing mechanism 52 dispenses a predetermined amount of sample into the reaction vessel 36a set at the sample discharge position. Thereafter, the reaction vessel 36a into which the sample has been discharged is moved to a reagent discharge position by the second reaction vessel transport unit.

The reagent dispensing mechanism 51 dispenses a predetermined amount of reagent into the reaction vessel 36a set at the reagent discharge position. Thereafter, the reaction vessel 36a is moved to the reaction liquid stirring unit by the second reaction vessel transport unit, and the sample and the reagent are stirred.

After the reaction liquid stirring, the reaction vessel 36a is moved to the incubator block by the first reaction vessel transport unit 59. The temperature of the incubator block is adjusted to an appropriate temperature for the purpose of promoting a reaction between the sample and the reagent. When the reaction process between the sample and the reagent on the incubator block has been completed, the reaction vessel 36a is moved to the sample discharge position by the first reaction vessel transport unit 59.

Thereafter, the reaction vessel 36a is moved to a reaction liquid aspiration position set under the immunodetection unit 58 that analyzes immune items of the sample, by the second reaction vessel transport unit. Thereafter, the reaction liquid is aspirated by a detection part in the immunodetection unit 58 and measurement of a reaction signal is executed.

After the signal measurement, the reaction vessel 36a is moved to the sample discharge position by the second reaction vessel transport unit and is subsequently discarded into the waste container 31 by the first reaction vessel transport unit 59.

Next, a biochemical analysis flow will be described below in the order of treatment.

The reaction disk 54 is a mechanism that holds a reaction liquid for analysis by the biochemical detection unit 57, and the temperature thereof is adjusted to an appropriate temperature for the purpose of promoting a reaction between a sample and a reagent similarly to the incubator block.

First, the sample dispensing mechanism 52 dispenses a predetermined amount of sample into a predetermined reaction cell 55 on the reaction disk 54. Thereafter, the reaction disk 54 rotates to move the reaction cell 55 into which the sample has been discharged to the access position of the reagent dispensing mechanism 51, and the reagent dispensing mechanism 51 dispenses a predetermined amount of reagent into the reaction cell 55 into which the sample has been discharged.

Subsequently, the reaction disk 54 rotates to move the reaction cell 55 into which the sample and the reagent have been discharged to the setting position of a stirring unit (illustration is omitted), and the sample and the reagent are stirred by the stirring unit.

When the reaction process between the sample and the reagent on the reaction disk 54 has been completed, the reaction disk 54 rotates to move the reaction cell 55 where the reaction liquid after the completion of the reaction is put to the setting position of the biochemical detection unit 57 that analyzes biochemical items of the sample.

Thereafter, measurement of a reaction signal is executed by a detection part in the biochemical detection unit 57. After the signal measurement, the reaction liquid is ejected from the reaction cell 55 by a reaction cell cleaning mechanism.

Furthermore, in order to protect an operation of each of the above-described various drive mechanisms, as illustrated in FIG. 1 to FIG. 3, the automatic analyzer 1 includes the main cover 21, a reagent cover 22 for protecting a reagent input part of the reagent disk 41, and a sample cover 23 for protecting a sample input part of the sample disk 42.

The main cover 21 is provided with an open and close sensor 21a that senses opening and closing of the main cover 21. The reagent cover 22 is provided with an open and close sensor 22a that senses opening and closing of the reagent cover 22. The sample cover 23 is provided with an open and close sensor 23a that senses opening and closing of the sample cover 23. Detection signals of the open and close sensors 21a, 22a, and 23a are input to the control unit 80 to be described later.

Moreover, inside the main cover 21, waste containers that store waste used for analysis and consumables containers that store consumables required for analysis are disposed. The waste containers are composed of the waste container 31 and a waste liquid container 32. The consumables containers are composed of a system reagent container 33, a system water container 34, the assay tip container 35, and the reaction vessel container 36.

The waste container 31 is a part into which the reaction vessel 36a that has been used for a reaction between a sample and a reagent and become used one, and the tip 35a after dispensing of a sample are discarded.

The waste liquid container 32 is a tank that holds used solutions such as system water to be described later and cleaning water.

The system reagent container 33 is a container that houses a system reagent bottle where a system reagent that is different from the reagent (assay reagent) held by the above-described reagent disk 41 and is used in common to a plurality of analysis items is accommodated.

The system water container 34 is a container that houses a system water bottle where the system water used for cleaning, dilution, and so forth is accommodated.

The assay tip container 35 is a container that stores a plurality of tips 35a before use.

The reaction vessel container 36 is a container that stores a plurality of reaction vessels 36a before use.

In the automatic analyzer 1 of the present example, the sample disk 42 covered by the sample cover 23, the reagent disk 41 covered by the reagent cover 22, and the main cover 21 that covers the reagent cover 22, the waste container 31, the waste liquid container 32, the system reagent container 33, the system water container 34, the assay tip container 35, the reaction vessel container 36, and so forth are deemed as what are equivalent to one or more mechanisms used for analysis of a sample.

Furthermore, the automatic analyzer 1 controls an operation of the respective pieces of equipment in the automatic analyzer 1 typified by the sample disk 42 and the sample dispensing mechanism 52 in addition to the mechanisms described above. In addition, the automatic analyzer 1 includes the control unit 80 that displays information on the display unit 11 and the display unit 11 that is illustrated in FIG. 1 and displays a device GUI as a part that can be checked from the appearance.

The control unit 80 is configured by a hardware board and a computer, for example, and incorporates a memory unit 81 such as a hard disk and a residual amount management unit 82.

In the control unit 80, guidance that prompts a user to perform work required for analysis is displayed on the display unit 11 when it is sensed that the main cover 21 is opened in the open and close sensor 21a, it is sensed that the reagent cover 22 is opened in the open and close sensor 22a, or it is sensed that the sample cover 23 is opened in the open and close sensor 23a. In the present example, a screen for performing work is displayed on the display unit 11 as the guidance. Details thereof will be described later.

This control unit 80 may be configured as hardware by a dedicated circuit board or may be configured by software executed by the computer. In the case of configuring the control unit 80 by hardware, the control unit 80 can be implemented by integrating a plurality of computing units that execute processing on a wiring board, in a semiconductor chip, or in a package. In the case of configuring the control unit 80 by software, the control unit 80 can be implemented by mounting a high-speed general-purpose CPU on the computer and executing a program to execute desired computation processing. It is also possible to upgrade an existing device by a recording medium (preferably memory unit 81) in which this program is recorded. Moreover, these device, circuit, and computer are connected by a wired or wireless network, and data is transmitted and received as appropriate.

In the memory unit 81, for example, control parameters required for control of an operation of each mechanism, sample information about various samples, various programs required for control of displaying of a screen on the display unit 11 in the above-described control unit 80, and so forth are memorized.

Furthermore, in the present example, the memory unit 81 memorizes work to be performed by the user when the main cover 21, the reagent cover 22, or the sample cover 23 is opened, depending on the type of the main cover 21, the reagent cover 22, or the sample cover 23.

The residual amount management unit 82 is a part that manages the storage margin of the tip 35a and the reaction vessel 36a that have been used in the waste container 31, and manages the residual amounts of the system reagent container 33, the system water container 34, the assay tip container 35, and the reaction vessel container 36.

In the present example, description will be made based on the assumption that this residual amount management unit 82 manages the storage margin and the residual amount from the number of times of execution of analysis. However, it is possible to attach sensors to the respective containers and manage the storage margin and the residual amount on the basis of input information from the sensors.

The display unit 11 is a liquid crystal display or the like that displays information about the automatic analyzer 1 to the user, and can be made into a touch panel system that doubles as an input unit. In this display unit 11, various kinds of information memorized in the memory unit 81 are displayed.

The above is the configuration of the automatic analyzer 1 of the present example.

The case in which the configuration of the automatic analyzer is equipped with both the immunodetection unit 58 and the biochemical detection unit 57 like those illustrated in FIG. 1 has been cited. However, the configuration of the automatic analyzer to which the present invention is applied is not limited thereto. For example, the present invention can be applied also to an automatic analyzer that includes either one detection unit of the immunodetection unit or the biochemical detection unit, or includes a detection unit for another analysis item additionally or as a substitute.

Moreover, the automatic analyzer is not limited to the form in which it is made into a single analysis module configuration like that illustrated in FIG. 1, and can be made into a configuration in which two or more modules of an analysis module that can measure various identical or different analysis items and a pretreatment module that executes pretreatment are connected to each other by conveying apparatus.

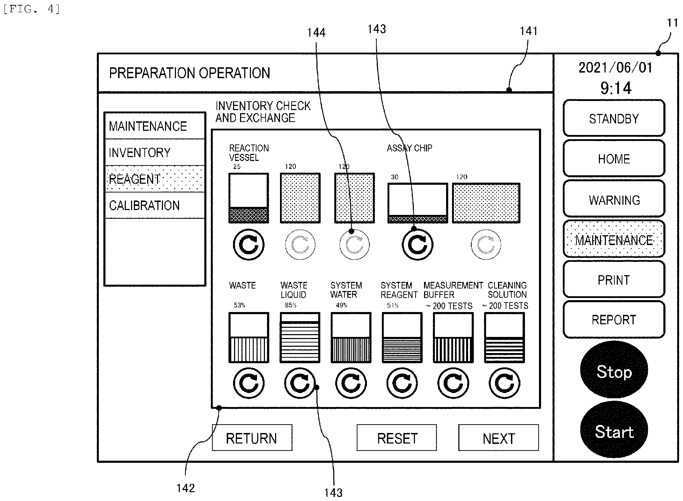

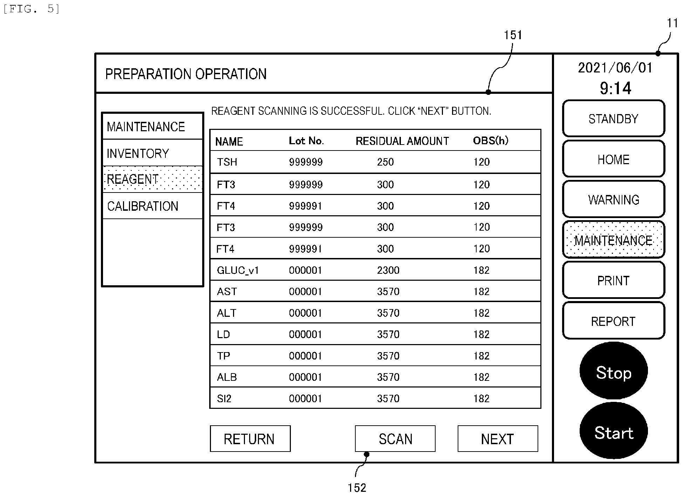

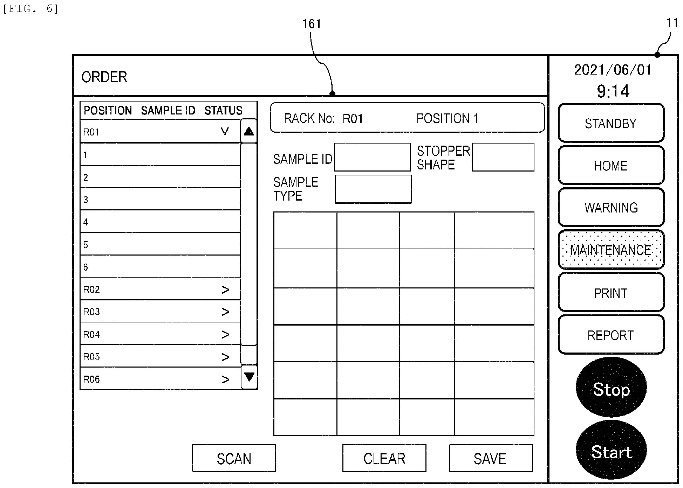

Subsequently, description will be made with use of FIG. 4 to FIG. 6 about details of a user guidance function relating to a user operation executed with opening and closing of the cover 21, 22, or 23 being a trigger in the automatic analyzer 1 of the present example. FIG. 4 is a diagram illustrating the configuration of a waste and consumables screen that is one example of the guidance in the automatic analyzer of Example 1. FIG. 5 is a diagram illustrating the configuration of a reagent registration screen. FIG. 6 is a diagram illustrating the configuration of a sample and analysis request registration screen.

First, a list of the correspondence between cover opening and closing and the user guidance is illustrated in Table 1.

**[Table 1]**

| Sensor information | Predicted operation of user | Predicted GUI operation of user | Executed guidance |
|---|---|---|---|
| Opening and closing of main cover | ·Replenishment of consumables | ·Reset of residual amounts of consumables and waste | Display of waste and consumables screen |
| | ·Discarding of contents of waste container | | |
| Opening and closing of main cover + Opening and closing of reagent cover | ·Replenishment of consumables | ·Reset of residual amounts of consumables and waste | 1. Display of waste and consumables screen |
| | ·Discarding of contents of waste container | | |
| | | ·Registration of reagent | 2. Display of reagent registration screen |
| | ·Input of reagent | | |
| Opening and closing of sample cover | ·Input of sample | ·Registration of sample and analysis request | Display of sample and analysis request registration screen |

As illustrated in Table 1, when the sensor information is "opening and closing of main cover 21," the predicted operation of the user is "replenishment of consumables" or "discarding of contents of waste container" because the possibility that the user executes discarding of the contents of the waste container or replenishment of the contents of the consumables container is high.

Therefore, it can be determined that the predicted device GUI operation of the user is "reset of residual amounts of consumables and waste." Thus, it is desired that the executed guidance is "display of waste and consumables screen 141 (see FIG. 4)."

When it is sensed by the open and close sensor 21a that the main cover 21 is opened, the control unit 80 executes control for displaying the waste and consumables screen 141 like one illustrated in FIG. 4 on the display unit 11 as the guidance.

At this time, based on information on the residual amount management unit 82, the control unit 80 checks whether there is a container in which the amount of waste is greater than a predetermined value regarding the waste container 31 and the waste liquid container 32, and checks whether there is a container in which the residual amount of consumables is less than a predetermined value regarding the system reagent container 33, the system water container 34, the assay tip container 35, and the reaction vessel container 36. Then, the control unit 80 highlights a residual amount reset button 143 corresponding to the waste container 31 or the waste liquid container 32 as the target in the waste and consumables screen 141 when it is sensed by the residual amount management unit 82 that the amount of waste is greater than the predetermined value, or highlights the residual amount reset button 143 corresponding to the system reagent container 33, the system water container 34, the assay tip container 35, or the reaction vessel container 36 as the target in the waste and consumables screen 141 when it is sensed by the residual amount management unit 82 that the amount of consumables is less than the predetermined value.

It is desirable to prevent omission of reset of the residual amount by flickering the corresponding residual amount reset button 143 as above. As the highlighting, a method of highlight display, display of a pop-up comment that prompts pressing-down, or the like can be used besides the flickering.

In the waste and consumables screen 141 in FIG. 4, the residual amounts of the waste containers and the consumables containers can be checked in a container residual amount display area 142.

When the volume in the waste container 31 or the waste liquid container 32 is greater than the predetermined value, the user discards the contents of the waste container 31 or the waste liquid container 32. When the residual amount of the system reagent container 33, the system water container 34, the assay tip container 35, or the reaction vessel container 36 is less than the predetermined value, the user replenishes the contents of the system reagent container 33, the system water container 34, the assay tip container 35, or the reaction vessel container 36 to the maximum.

After the execution of the work, the user executes reset of the residual amount of the waste container 31, the waste liquid container 32, the system reagent container 33, the system water container 34, the assay tip container 35, and the reaction vessel container 36 by pressing down the residual amount reset buttons 143 corresponding to the waste container 31, the waste liquid container 32, the system reagent container 33, the system water container 34, the assay tip container 35, or the reaction vessel container 36 for which discarding or replenishment has been executed, in the residual amount reset buttons 143 and 144 in the container residual amount display area 142.

Furthermore, as illustrated in Table 1, when the sensor information is "opening and closing of main cover 21 + opening and closing of reagent cover 22," the predicted operation of the user is "replenishment of consumables," "discarding of contents of waste container," or "input of reagent" because the possibility that the user inputs a reagent into the reagent disk 41 from a reagent input port is high.

Therefore, it can be determined that the predicted device GUI operation of the user is "reset of residual amounts of consumables and waste" or "registration of reagent." Thus, it is desired that the executed guidance is "display of waste and consumables screen 141" or "display of reagent registration screen 151 (see FIG. 5)."

The control unit 80 displays the reagent registration screen 151 for registering a reagent like one illustrated in FIG. 5 when the reagent cover 22 is opened and closed. At this time, the control unit 80 flickers a scan button 152 for start of reagent registration.

In the automatic analyzer 1 of the present example illustrated in FIG. 1 to FIG. 3, part of the reagent cover 22 and the main cover 21 interfere with each other in design. Therefore, before the reagent cover 22 is opened, the main cover 21 needs to be inevitably opened because of the mechanism thereof. Thus, it is desirable to execute also the guidance relating to the reset of the residual amounts of consumables and waste (see FIG. 4).

Here, there is no particular limitation on which of the reagent registration screen 151 and the waste and consumables screen 141 is displayed earlier, and either may be displayed earlier. However, in the automatic analyzer 1 of the present example, the reagent cover 22 cannot be opened unless the main cover 21 is opened because of the structure. Therefore, first, the waste and consumables screen 141 is displayed on the display unit 11, and a transition from the waste and consumables screen 141 to the reagent registration screen 151 can be automatically made at the timing when it is sensed that the reagent cover 22 is opened.

In the present example, the case of the structure in which the reagent cover 22 cannot be opened and closed unless the main cover 21 is opened has been illustrated. However, in the case of a structure in which the reagent cover is not affected by opening and closing of another cover such as the main cover, it is desirable to display the reagent registration screen 151 on the display unit 11 at the timing when the reagent cover is opened.

Furthermore, the reagent cover is not limited to the cover of the reagent disk 41 that accommodates assay reagents and a cover of an accommodation part of system reagents can be employed.

Moreover, as illustrated in Table 1, when the sensor information is "opening and closing of sample cover 23," the predicted operation of the user is "input of sample" because the possibility that the user inputs a sample into the sample disk 42 from a sample input port is high.

Therefore, it can be determined that the predicted device GUI operation of the user is "registration of sample and analysis request." Thus, it is desired that the executed guidance is "display of sample and analysis request registration screen 161."

The control unit 80 displays the sample and analysis request registration screen 161 for registering a sample like one illustrated in FIG. 6 when the sample cover 23 is opened and closed.

After sample input, the user checks the sample and analysis request registration screen 161 in FIG. 6 displayed on the display unit 11. When information about sample and analysis request has been sent from an upper-level system (HOST), the user checks the relevant information by the screen. When the information has not been sent, the user directly registers sample and analysis request information from the screen.

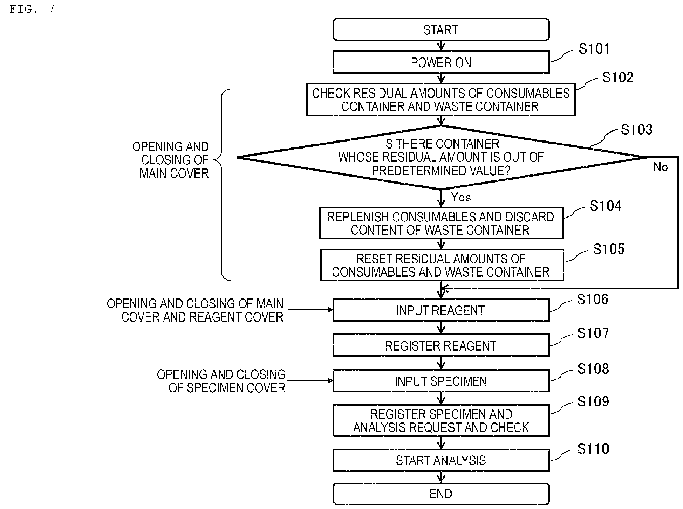

Subsequently, the flow of operations until the start of analysis by the user in the automatic analyzer 1 of the present example will be described with use of FIG. 7. FIG. 7 is a flow chart illustrating one example of a procedure until start of analysis in the automatic analyzer of the present Example 1.

First, as illustrated in FIG. 7, after the power supply of the automatic analyzer 1 is turned ON by the user (step S101), the main cover 21 is opened, and the residual amounts of the system reagent container 33, the system water container 34, the assay tip container 35, the reaction vessel container 36, the waste container 31, and the waste liquid container 32 are checked (step S102).

Thereafter, it is checked whether or not the waste container 31, the waste liquid container 32, the system reagent container 33, the system water container 34, the assay tip container 35, or the reaction vessel container 36 whose residual amount is out of the predetermined value exists (step S103). When it is determined that the container whose residual amount is out of the predetermined value exists, the processing is advanced to a step S104. When it is not determined that the container whose residual amount is out of the predetermined value exists, the processing is advanced to a step S106. Replenishment of consumables and discarding of the contents of the waste container 31 and the waste liquid container 32 are executed by the user (step S104).

Thereafter, the residual amounts of the consumables and waste containers are reset (step S105).

During these step S102 to step S105, the main cover 21 is opened, and therefore the waste and consumables screen 141 is displayed on the display unit 11.

Thereafter, the reagent cover 22 is opened and a reagent is input into the reagent disk 41 (step S106), and the reagent is registered in the device after completion of the input (step S107).

During this step S106, the reagent cover 22 is opened in addition to the main cover 21, and therefore the reagent registration screen 151 is displayed on the display unit 11.

Thereafter, the sample cover 23 is opened and a sample is input into the sample disk 42 (step S108). During this step S108, the sample cover 23 is opened, and therefore the sample and analysis request registration screen 161 is displayed on the display unit 11.

After the sample input, registration of sample, analysis request, and check are executed (step S109) and the analysis is started (step S110).

Next, effects of the present example will be described.

The automatic analyzer 1 of the above-described Example 1 is a device for dispensing each of a sample and a reagent into the reaction vessel 36a, and making the sample and the reagent react with each other to analyze the reacted liquid. The automatic analyzer 1 includes one or more mechanisms used for analysis of the sample, the main cover 21, the reagent cover 22, and the sample cover 23 that cover one or more of the mechanisms, the open and close sensors 21a, 22a, and 23a that sense opening and closing of the main cover 21, the reagent cover 22, and the sample cover 23, the display unit 11 that displays information about the automatic analyzer 1 to the user, and the control unit 80 that controls an operation of the mechanism and displays the information on the display unit 11. The control unit 80 displays guidance that prompts a user to perform the work necessary for the analysis on the display unit 11 when it is sensed in the open and close sensor 21a, 22a, or 23a that the main cover 21, the reagent cover 22, or the sample cover 23 is opened.

As above, a hardware operation such as opening and closing of the main cover 21, the reagent cover 22, or the sample cover 23 by the user, is employed as a trigger and the next action of the user is predicted, and the user guidance function relating to the analysis procedure is mounted. Due to this, the frequency at which the user checks a manual decreases. Therefore, the cognitive load of the user is alleviated. In addition, omission of execution in the operation procedure due to it can be reduced compared to the prior art. In particular, also for the user inexperienced in the operation of the automatic analyzer 1, who needs to make a check with frequent switching among the device mechanism, the device GUI, and the manual until learning the operation, omission of execution in the procedure can be reduced due to the reduction in the cognitive load.

Furthermore, the automatic analyzer 1 further includes the memory unit 81 that memorizes the work to be performed by the user when the main cover 21, the reagent cover 22, or the sample cover 23 is opened, depending on the type of the main cover 21, the reagent cover 22, or the sample cover 23. Therefore, stable guidance can be implemented.

Moreover, the control unit 80 displays a screen for performing the work on the display unit 11 as the guidance. This can provide the guidance in a form that allows easier understanding by the user on the device GUI.

Furthermore, the automatic analyzer 1 further includes the system reagent container 33, the system water container 34, the assay tip container 35, and the reaction vessel container 36 that store consumables required for the analysis, and the control unit 80 displays the waste and consumables screen 141 as the guidance when it is sensed by the open and close sensor 21a that the main cover 21 is opened. This makes it possible to suppress stop of the analysis due to determining that the consumables are insufficient more surely, and execute the analysis more smoothly.

Moreover, the automatic analyzer 1 further includes the residual amount management unit 82 that manages the residual amount of the consumables, and the control unit 80 highlights the area corresponding to the system reagent container 33, the system water container 34, the assay tip container 35, or the reaction vessel container 36 as the target in the waste and consumables screen 141 when it is sensed by the residual amount management unit 82 that the amount of consumables is less than the predetermined value. This can prompt replenishment of the consumables involving insufficiency more strongly and prompt reflection of the replenishment, and it is possible to suppress determining that the consumables are insufficient more surely.

Furthermore, the automatic analyzer 1 further includes the waste container 31 and the waste liquid container 32 that store waste used for the analysis, and the control unit 80 displays the waste and consumables screen 141 as the guidance when it is sensed by the open and close sensor 21a that the main cover 21 is opened. Due to this, stop of the analysis due to determining that discarding of the waste is impossible and contamination of the device are further suppressed, and it becomes possible to execute the analysis more smoothly and alleviate the burden of the user.

Moreover, the automatic analyzer 1 further includes the residual amount management unit 82 that manages the storage margin of the waste, and the control unit 80 highlights the area corresponding to the waste container 31 or the waste liquid container 32 as the target in the waste and consumables screen 141 when it is sensed by the residual amount management unit 82 that the amount of waste is greater than the predetermined value. This can prompt treatment of the waste for which the treatment is necessary and suppress determining that discarding of the waste is impossible more surely.

Furthermore, the automatic analyzer 1 further includes the reagent disk 41 that holds the reagent container where the reagent is accommodated, and the cover is the reagent cover 22 that covers the reagent disk 41**.** The control unit 80 displays the reagent registration screen 151 for registering the reagent when the reagent cover 22 is opened and closed. Due to this, the reagent can be surely registered, and it is possible to more surely avoid the occurrence of a situation such as suspension of the analysis attributed to determining that the reagent required for the analysis is insufficient due to the absence of registration of the reagent.

Moreover, the automatic analyzer 1 further includes the sample disk 42 that holds the sample container where the sample is accommodated, and the cover is the sample cover 23 that covers the sample disk 42. The control unit 80 displays the sample and analysis request registration screen 161 for registering the sample when the sample cover 23 is opened and closed. This can surely make registration work of the sample be performed and make the analysis be started rapidly.

### <Example 2>

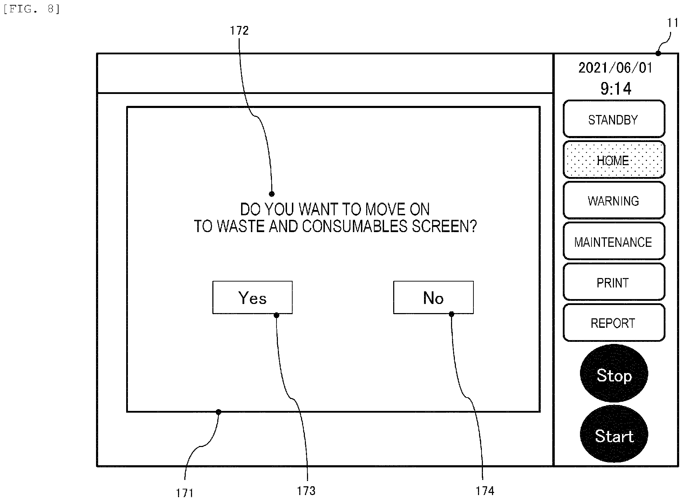

An automatic analyzer and a guidance method in the automatic analyzer according to Example 2 will be described with use of FIG. 8. FIG. 8 is a diagram illustrating the configuration of a pop-up area that is one example of guidance in the automatic analyzer of the present Example 2.

Differently from Example 1, the control unit 80 of the automatic analyzer of the present example displays, as the guidance, a pop-up area 171 for checking out whether or not to move on to the screen for performing the work (waste and consumables screen 141, reagent registration screen 151, or sample and analysis request registration screen 161) on the display unit 11 as illustrated in FIG. 8.

In the pop-up area 171 illustrated in FIG. 8, as areas displayed in the display unit 11, a guidance display area 172, a Yes button 173 for moving on to the work screen (waste and consumables screen 141, reagent registration screen 151, or sample and analysis request registration screen 161), a No button 174 for closing the pop-up area 171 without the moving-on, and so forth are displayed.

For example, when the main cover 21 is opened and closed, regarding the guidance of the reset of the residual amounts of consumables and waste, display of the pop-up area 171 about whether or not to move on to the waste and consumables screen 141 is executed in such a manner that the timing of the display is divided into the timing of the opening of the main cover 21 and the timing of the closing of the main cover 21.

When it is sensed that the main cover 21 is opened, the control unit 80 refers to information on the residual amount management unit 82, and checks whether there is a container whose residual amount is full regarding the waste container 31 and the waste liquid container 32, and checks whether there is a container whose residual amount is zero regarding the system reagent container 33, the system water container 34, the assay tip container 35, and the reaction vessel container 36.

When it is determined that there is a container corresponding to the condition, the control unit 80 displays, on the display unit 11, the pop-up area 171 for checking out, with Yes or No, whether to make a screen transition to the waste and consumables screen 141 in which information that becomes a determination criterion about whether or not replenishment should be executed is displayed to the user like that illustrated in FIG. 8.

When the No button 174 is selected by the user, the pop-up area 171 is closed and the guidance is ended. In contrast, when the Yes button 173 is selected, a transition to the waste and consumables screen 141 is automatically made similarly to Example 1, and the residual amount reset button 143 or 144 of the container of the replenishment target is flickered.

Furthermore, when opening and closing of the reagent cover 22 is sensed, a pop-up area for checking out whether to move on to the reagent registration screen 151 for registering a reagent is displayed on the display unit 11. Only when Yes is selected in the pop-up area by the user, an automatic transition to the reagent registration screen 151 like that illustrated in FIG. 5 is made on the display unit 11 and the scan button 152 is flickered.

Moreover, when opening and closing of the sample cover 23 is sensed, a pop-up area for checking out whether to move on to the sample and analysis request registration screen 161 for registering a sample is displayed on the display unit 11. Only when Yes is selected in the pop-up area by the user, an automatic transition to the sample and analysis request registration screen 161 is made on the display unit 11.

The other configuration and operation are substantially the same configuration and operation as the automatic analyzer and the guidance method in the automatic analyzer according to the above-described Example 1 and details thereof are omitted.

Also in the automatic analyzer and the guidance method in the automatic analyzer according to Example 2, almost the same effects as the automatic analyzer and the guidance method in the automatic analyzer according to the above-described Example 1 are obtained.

Furthermore, the control unit 80 displays the pop-up area 171 for checking out whether or not to move on to the screen for performing work on the display unit 11 as the guidance. Due to this, a forced transition of the screen is not made. Thus, handling is allowed also when different work is being performed and more proper guidance becomes possible.

<Example 3>

An automatic analyzer and a guidance method in the automatic analyzer according to Example 3 will be described.

In conjunction with a transition to the waste and consumables screen 141, the reagent registration screen 151, or the sample and analysis request registration screen 161 in the automatic analyzer 1 illustrated in Example 1, or in display of the pop-up area 171 in the automatic analyzer illustrated in Example 2, the control unit 80 notifies, as guidance, the user that guidance is executed by a warning sound such as a beep sound by a speaker or the like favorably annexed to the display unit 11.

The other configuration and operation are substantially the same configuration and operation as the automatic analyzer and the guidance method in the automatic analyzer according to the above-described Example 1, and details thereof are omitted.

Also in the automatic analyzer and the guidance method in the automatic analyzer according to Example 3, almost the same effects as the automatic analyzer and the guidance method in the automatic analyzer according to the above-described Example 1 are obtained.

Furthermore, the control unit 80 makes the warning sound as the guidance. This allows the user to understand that guidance is being executed more clearly and easily, and the possibility of the occurrence of omission of work can be further reduced.

### <Example 4>

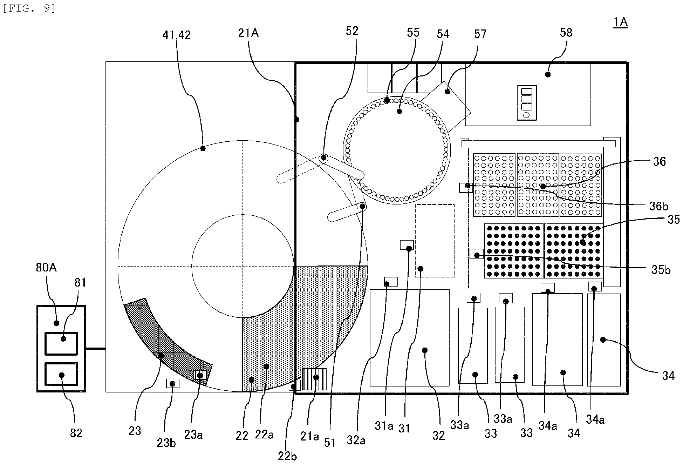

An automatic analyzer and a guidance method in the automatic analyzer according to Example 4 will be described with use of FIG. 9. FIG. 9 is a top view illustrating the schematic configuration of the inside of the automatic analyzer of the present Example 4.

In an automatic analyzer 1A of the present example illustrated in FIG. 9, an LED 22b is set around the reagent cover 22. An LED 23b is set around the sample cover 23. LEDs 31a, 32a, 33a, 34a, 35b, and 36b are set around installation parts of the waste container 31, the waste liquid container 32, the system reagent container 33, the system water container 34, the assay tip container 35, and the reaction vessel container 36.

Furthermore, when a certain part becomes a guidance subject in Example 1, Example 2, or Example 3, a control unit 80A lights or flickers the LED 22b, 23b, 31a, 32a, 33a, 34a, 35b, or 36b around the mechanism to be the target of work as guidance in addition to a screen transition, pop-up, or warning sound.

Specifically, when guidance of reset of the residual amounts of consumables and waste is executed, the LED 31a, 32a, 33a, 34a, 35b, or 36b disposed around the installation part of the container that is the target of the reset of the residual amount is made to emit light. Moreover, when guidance of reagent registration is executed, the LED 22b disposed around the reagent cover 22 is made to emit light. When guidance of sample and analysis request registration is executed, the LED 23b disposed around the sample cover 23 is made to emit light.

Here, in the automatic analyzer 1A, it is desirable to employ a clear cover as the whole or part of a main cover 21A such that the light of the LEDs 31a, 32a, 33a, 34a, 35b, and 36b can be seen.

The other configuration and operation are substantially the same configuration and operation as the automatic analyzer and the guidance method in the automatic analyzer according to the above-described Example 1 and details thereof are omitted.

Also in the automatic analyzer and the guidance method in the automatic analyzer according to Example 4, almost the same effects as the automatic analyzer and the guidance method in the automatic analyzer according to the above-described Example 1 are obtained.

Moreover, the automatic analyzer 1A further includes the LEDs 22b, 23b, 31a, 32a, 33a, 34a, 35b, and 36b around the mechanisms, and the control unit 80A lights or flickers the LED 22b, 23b, 31a, 32a, 33a, 34a, 35b, or 36b around the mechanism to be the target of work as guidance. This allows the part that is the guidance subject to be visually understood, and alleviation of the burden of the user can be intended.

### <Others>

The present invention is not limited to the above-described examples and various modification examples are included therein. The above-described examples are what are described in detail in order to explain the present invention in an easy-to-understand manner and are not necessarily limited to what include all configurations described.

Furthermore, it is also possible to replace part of a configuration of a certain example by a configuration of another example. Moreover, it is also possible to add a configuration of another example to a configuration of a certain example. In addition, it is also possible to execute addition, deletion, or substitution of another configuration regarding part of a configuration of each example.

### Reference Signs List

1, 1A: automatic analyzer
11: display unit
21, 21A: main cover
21a, 22a, 23a: open and close sensor (sensing unit)
22b, 23b, 31a, 32a, 33a, 34a, 35b, 36b: LED
31: waste container (storage unit)
32: waste liquid container (storage unit)
33: system reagent container (storage unit)
34: system water container (storage unit)
35: assay chip container (storage unit)
35a: chip
36: reaction vessel container (storage unit)
36a: reaction vessel
41: reagent disk
42: specimen disk
51: reagent dispensing mechanism
52: specimen dispensing mechanism
54: reaction disk
55: reaction cell
57: biochemical detection unit
58: immunodetection unit
59: first reaction vessel transport unit
80, 80A: control unit
81: memory unit
82: residual amount management unit
141: waste and consumables screen (consumables management
screen, waste management screen)
142: container residual amount display area
143: residual amount reset button (area)
144: residual amount reset button
151: reagent registration screen
152: scan button
161: specimen and analysis request registration screen
171: pop-up area
172: guidance display area
173: Yes button
174: No button

## Claims

1. An automatic analyzer (1; 1A) that dispenses each of a specimen and a reagent into a reaction vessel (36a) and makes the specimen and the reagent react with each other to analyze the reacted liquid, the automatic analyzer (1; 1A) comprising:
plural mechanisms that include a reagent disk (41) holding a reagent container where the reagent is accommodated, and that are used for analysis of the specimen;
a consumables storage unit (33-36) that stores consumables required for the analysis;
a reagent cover (22) that covers the reagent disk (41);
a sensing unit (21a, 22a, 23a) including a first sensor (22a) that senses opening and closing of the reagent cover (22);
a display unit (11) that displays information about the automatic analyzer (1; 1A) to a user; and
a control unit (80; 80A) that controls an operation of the plural mechanisms and displays the information on the display unit (11),
**characterized in that**
the automatic analyzer (1; 1A) comprises a main cover (21; 21A) that covers the plural mechanisms, the consumables storage unit (33-36), and the reagent cover (22), wherein the sensing unit (21a, 22a, 23a) includes a second sensor (21a) that senses opening and closing of the main cover (21; 21A),
the reagent cover (22) is a structure that is impossible to open when the main cover (21; 21A) is not opened, and
the control unit (80; 80A)
displays, on the display unit (11), a consumables management screen (141) as guidance that prompts the user to perform work necessary for the analysis when it is sensed by the second sensor (21a) that the main cover (21; 21A) is opened, and
displays the consumables management screen (141) and a reagent registration screen (151) on the display unit (11) when it is sensed by the second sensor (21a) that the main cover (21; 21A) is opened and by the first sensor (22a) that the reagent cover (22) is opened.

2. The automatic analyzer (1; 1A) according to claim 1, further comprising:
a memory unit (81) that memorizes the work to be performed by the user when the main cover (21; 21A) or the reagent cover (22) is opened, depending on types of the main cover (21; 21A) and the reagent cover (22).

3. The automatic analyzer (1; 1A) according to claim 1, wherein as the guidance, the control unit (80; 80A) displays a screen for performing the work on the display unit (11).

4. The automatic analyzer (1; 1A) according to claim 1, wherein as the guidance, the control unit (80; 80A) displays a pop-up area (171) for checking out whether or not to move on to a screen for performing the work on the display unit (11).

5. The automatic analyzer (1; 1A) according to claim 4, wherein as the guidance, the control unit (80; 80A) makes a warning sound.

6. The automatic analyzer (1; 1A) according to claim 3, further comprising:
an LED (22B, 23B, 31A, 33A, 34A, 35B, 36B) around the plural mechanisms,
wherein as the guidance, the control unit (80; 80A) lights or flickers the LED (22B, 23B, 31A, 33A, 34A, 35B, 36B) around the plural mechanisms to be a target of the work.

7. The automatic analyzer (1; 1A) according to claim 1, further comprising:
a residual amount management unit (82) that manages a residual amount of the consumables,
wherein when it is sensed by the residual amount management unit (82) that an amount of the consumables is less than a predetermined value, the control unit (80; 80A) highlights an area corresponding to the target consumables storage unit (33-36) of the consumables management screen (141).

8. The automatic analyzer (1; 1A) according to claim 1, further comprising:
a waste storage unit (31, 32) that stores a waste used for the analysis,
wherein when it is sensed by the second sensor (21a) that the main cover (21; 21A) is opened, the control unit (80; 80A) displays a waste management screen (141) as the guidance.

9. The automatic analyzer (1; 1A) according to claim 8, further comprising:
a residual amount management unit (82) that manages a storage margin of the waste,
wherein when it is sensed by the residual amount management unit (82) that an amount of the waste is greater than a predetermined value, the control unit (80; 80A) highlights an area corresponding to the target waste storage unit (31, 32) of the waste management screen (141).

10. The automatic analyzer (1; 1A) according to claim 1, further comprising:
a specimen disk (42) that holds a specimen container where the specimen is accommodated; and
a specimen cover (23) that covers the specimen disk (42),
wherein, when the specimen cover (23) is opened and closed, the control unit (80; 80A) displays a specimen registration screen (161) for registering the specimen.

11. A guidance method in an automatic analyzer (1; 1A) including plural mechanisms that include a reagent disk (41) holding a reagent container where a reagent is accommodated and that are used for analysis of a specimen, a consumables storage unit (33-36) that stores consumables required for the analysis, a reagent cover (22) that covers the reagent disk (41), a main cover (21; 21A) that covers the plural mechanisms, the consumables storage unit (33-36). and the reagent cover (22), a sensing unit (21a, 22a, 23a) including a second sensor (21a) that senses opening and closing of the main cover (21; 21A) and a first sensor (22a) that senses opening and closing of the reagent cover (22), a display unit (11) that displays information about the automatic analyzer (1; 1A) to a user, and a control unit (80; 80A) that controls an operation of the plural mechanisms and displays the information on the display unit (11), the reagent cover (22) being a structure that is impossible to open when the main cover (21; 21A) is not opened, the guidance method comprising:
causing the display unit (11) to display a consumables management screen (141) for registering the reagent as guidance that prompts the user to perform work necessary for the analysis when it is sensed by the second sensor (21a) that the main cover (21; 21A) is opened, and to display the consumables management screen (141) and a reagent registration screen (151) when it is sensed by the second sensor (21a) that the main cover (21; 21A) is opened and by the first sensor (22a) that the reagent cover (22) is opened.

## Patentansprüche

1. Automatische Analysevorrichtung (1; 1A), die jeweils eine Probe und ein Reagens in ein Reaktionsgefäß (36a) abgibt und die Probe und das Reagens miteinander reagieren lässt, um die reagierte Flüssigkeit zu analysieren, wobei die automatische Analysevorrichtung (1; 1A) umfasst:
mehrere Mechanismen, die eine Reagenzscheibe (41) umfassen, die einen Reagenzbehälter hält, in dem das Reagens untergebracht ist, und die zur Analyse der Probe verwendet werden;
eine Verbrauchsmaterialspeichereinheit (33-36), die für die Analyse erforderliche Verbrauchsmaterialien speichert;
eine Reagenzabdeckung (22), die die Reagenzscheibe (41) abdeckt;
eine Erfassungseinheit (21a, 22a, 23a), die einen ersten Sensor (22a) umfasst, der das Öffnen und Schließen der Reagenzabdeckung (22) erfasst;
eine Anzeigeeinheit (11), die einem Benutzer Informationen über die automatische Analysevorrichtung (1; 1A) anzeigt; und
eine Steuereinheit (80; 80A), die einen Betrieb der mehreren Mechanismen steuert und die Informationen auf der Anzeigeeinheit (11) anzeigt,
**dadurch gekennzeichnet, dass**
die automatische Analysevorrichtung (1; 1A) eine Hauptabdeckung (21; 21A) umfasst, die die mehreren Mechanismen, die Verbrauchsmaterialspeichereinheit (33-36) und die Reagenzabdeckung (22) abdeckt, wobei die Erfassungseinheit (21a, 22a, 23a) einen zweiten Sensor (21a) umfasst, der das Öffnen und Schließen der Hauptabdeckung (21; 21A) erfasst,
die Reagenzabdeckung (22) eine Struktur ist, die unmöglich zu öffnen ist, wenn die Hauptabdeckung (21; 21A) nicht geöffnet ist, und
die Steuereinheit (80; 80A)
auf der Anzeigeeinheit (11) einen Verbrauchsmaterialverwaltungsbildschirm (141) als Führung anzeigt, die den Benutzer dazu auffordert, für die Analyse erforderliche Arbeiten durchzuführen, wenn durch den zweiten Sensor (21a) erfasst wird, dass die Hauptabdeckung (21; 21A) geöffnet ist, und
den Verbrauchsmaterialverwaltungsbildschirm (141) und einen Reagenzregistrierungsbildschirm (151) auf der Anzeigeeinheit (11) anzeigt, wenn durch den zweiten Sensor (21a) erfasst wird, dass die Hauptabdeckung (21; 21A) geöffnet ist und durch den ersten Sensor (22a) erfasst wird, dass die Reagenzabdeckung (22) geöffnet ist.

2. Automatische Analysevorrichtung (1; 1A) nach Anspruch 1, ferner umfassend:
eine Speichereinheit (81), die die vom Benutzer durchzuführenden Arbeiten abhängig von den Arten der Hauptabdeckung (21; 21A) und der Reagenzabdeckung (22) speichert, wenn die Hauptabdeckung (21; 21A) oder die Reagenzabdeckung (22) geöffnet ist.

3. Automatische Analysevorrichtung (1; 1A) nach Anspruch 1, wobei als die Führung die Steuereinheit (80; 80A) einen Bildschirm zur Durchführung der Arbeit auf der Anzeigeeinheit (11) anzeigt.

4. Automatische Analysevorrichtung (1; 1A) nach Anspruch 1, wobei als die Führung die Steuereinheit (80; 80A) einen Popup-Bereich (171) zur Überprüfung, ob zu einem Bildschirm zur Durchführung der Arbeit übergegangen werden soll oder nicht, auf der Anzeigeeinheit (11) anzeigt.

5. Automatische Analysevorrichtung (1; 1A) nach Anspruch 4, wobei als die Führung die Steuereinheit (80; 80A) einen Warnton erzeugt.

6. Automatische Analysevorrichtung (1; 1A) nach Anspruch 3, ferner umfassend:
eine LED (22B, 23B, 31A, 33A, 34A, 35B, 36B) um die mehreren Mechanismen herum,
wobei als die Führung die Steuereinheit (80; 80A) die LED (22B, 23B, 31A, 33A, 34A, 35B, 36B) um die mehreren Mechanismen herum leuchten lässt oder blinken lässt, die ein Ziel der Arbeit sein sollen.

7. Automatische Analysevorrichtung (1; 1A) nach Anspruch 1, ferner umfassend:
eine Restmengenverwaltungseinheit (82), die eine Restmenge der Verbrauchsmaterialien verwaltet,
wobei, wenn durch die Restmengenverwaltungseinheit (82) erfasst wird, dass eine Menge der Verbrauchsmaterialien geringer als ein vorbestimmter Wert ist, die Steuereinheit (80; 80A) einen Bereich entsprechend der Zielverbrauchsmaterialspeichereinheit (33-36) des Verbrauchsmaterialverwaltungsbildschirms (141) hervorhebt.

8. Automatische Analysevorrichtung (1; 1A) nach Anspruch 1, ferner umfassend:
eine Abfallspeichereinheit (31, 32), die für die Analyse verwendeten Abfall speichert,
wobei, wenn durch den zweiten Sensor (21a) erfasst wird, dass die Hauptabdeckung (21; 21A) geöffnet ist, die Steuereinheit (80; 80A) einen Abfallverwaltungsbildschirm (141) als die Führung anzeigt.

9. Automatische Analysevorrichtung (1; 1A) nach Anspruch 8, ferner umfassend:
eine Restmengenverwaltungseinheit (82), die eine Speicherkapazität des Abfalls verwaltet,
wobei, wenn durch die Restmengenverwaltungseinheit (82) erfasst wird, dass eine Menge des Abfalls größer ist als ein vorbestimmter Wert, die Steuereinheit (80; 80A) einen Bereich entsprechend der Zielabfallspeichereinheit (31, 32) des Abfallverwaltungsbildschirms (141) hervorhebt.

10. Automatische Analysevorrichtung (1; 1A) nach Anspruch 1, ferner umfassend:
eine Probenscheibe (42), die einen Probenbehälter hält, in dem die Probe untergebracht ist; und
eine Probenabdeckung (23), die die Probenscheibe (42) abdeckt, wobei, wenn die Probenabdeckung (23) geöffnet und geschlossen wird, die Steuereinheit (80; 80A) einen Probenregistrierungsbildschirm (161) zur Registrierung der Probe anzeigt.

11. Führungsverfahren in einer automatischen Analysevorrichtung (1; 1A), die mehrere Mechanismen umfasst, die eine Reagenzscheibe (41) umfassen, die einen Reagenzbehälter hält, in dem ein Reagens untergebracht ist, und die zur Analyse einer Probe verwendet werden, eine Verbrauchsmaterialspeichereinheit (33-36), die für die Analyse erforderliche Verbrauchsmaterialien speichert, eine Reagenzabdeckung (22), die die Reagenzscheibe (41) abdeckt, eine Hauptabdeckung (21; 21A), die die mehreren Mechanismen, die Verbrauchsmaterialspeichereinheit (33-36) und die Reagenzabdeckung (22) abdeckt, eine Erfassungseinheit (21a, 22a, 23a), die einen zweiten Sensor (21a), der das Öffnen und Schließen der Hauptabdeckung (21; 21A) erfasst, und einen ersten Sensor (22a), der das Öffnen und Schließen der Reagenzabdeckung (22) erfasst, umfasst, eine Anzeigeeinheit (11), die einem Benutzer Informationen über die automatische Analysevorrichtung (1; 1A) anzeigt, und eine Steuereinheit (80; 80A), die einen Betrieb der mehreren Mechanismen steuert und die Informationen auf der Anzeigeeinheit (11) anzeigt, wobei die Reagenzabdeckung (22) eine Struktur ist, die unmöglich zu öffnen ist, wenn die Hauptabdeckung (21; 21A) nicht geöffnet ist, wobei das Führungsverfahren umfasst:
Veranlassen der Anzeigeeinheit (11), einen Verbrauchsmaterialverwaltungsbildschirm (141) zur Registrierung des Reagenzes als Führung anzuzeigen, die den Benutzer dazu auffordert, für die Analyse erforderliche Arbeiten durchzuführen, wenn durch den zweiten Sensor (21a) erfasst wird, dass die Hauptabdeckung (21; 21A) geöffnet ist, und den Verbrauchsmaterialverwaltungsbildschirm (141) und einen Reagenzregistrierungsbildschirm (151) anzuzeigen, wenn durch den zweiten Sensor (21a) erfasst wird, dass die Hauptabdeckung (21; 21A) geöffnet ist und durch den ersten Sensor (22a) erfasst wird, dass die Reagenzabdeckung (22) geöffnet ist.

## Revendications

1. Analyseur automatique (1 ; 1A) qui distribue chacun d'un échantillon et d'un réactif dans un récipient (36a) de réaction et amène l'échantillon et le réactif à réagir l'un avec l'autre pour analyser le liquide ayant réagi, l'analyseur automatique (1 ; 1A) comprenant :
des mécanismes multiples qui incluent un disque (41) pour réactif qui contient un récipient pour réactif où le réactif est reçu, et qui sont utilisés pour une analyse de l'échantillon ;
une unité (33-36) de stockage de consommables qui stocke des consommables requis pour l'analyse ;
un capot (22) pour réactif qui recouvre le disque (41) pour réactif ;
une unité (21a, 22a, 23a) de détection incluant un premier capteur (22a) qui détecte l'ouverture et la fermeture du capot (22) pour réactif ;
une unité (11) d'affichage qui affiche des informations relatives à l'analyseur automatique (1 ; 1A) pour un utilisateur ; et
une unité (80 ; 80A) de commande qui commande un fonctionnement des mécanismes multiples et affiche les informations sur l'unité (11) d'affichage,
**caractérisé en ce que**
l'analyseur automatique (1 ; 1A) comprend un capot principal (21 ; 21A) qui recouvre les mécanismes multiples, l'unité (33-36) de stockage de consommables, et le capot (22) pour réactif, dans lequel l'unité (21a, 22a, 23a) de détection inclut un deuxième capteur (21a) qui détecte l'ouverture et la fermeture du capot principal (21 ; 21A),
le capot (22) pour réactif est une structure qui est impossible à ouvrir lorsque le capot principal (21 ; 21A) n'est pas ouvert, et
l'unité (80 ; 80A) de commande
affiche, sur l'unité (11) d'affichage, un écran (141) de gestion de consommables comme un guide qui invite l'utilisateur à effectuer un travail nécessaire pour l'analyse lorsqu'il est détecté par le deuxième capteur (21a) que le capot principal (21 ; 21A) est ouvert, et
affiche l'écran (141) de gestion de consommables et un écran (151) d'enregistrement de réactif sur l'unité (11) d'affichage lorsqu'il est détecté par le deuxième capteur (21a) que le capot principal (21 ; 21A) est ouvert et par le premier capteur (22a) que le capot (22) pour réactif est ouvert.

2. Analyseur automatique (1 ; 1A) selon la revendication 1, comprenant en outre :
une unité (81) de mémoire qui mémorise le travail à effectuer par l'utilisateur lorsque le capot principal (21 ; 21A) ou le capot (22) pour réactif est ouvert, en fonction de types du capot principal (21 ; 21A) et du capot (22) pour réactif.

3. Analyseur automatique (1 ; 1A) selon la revendication 1, dans lequel, comme le guide, l'unité (80 ; 80A) de commande affiche un écran pour effectuer le travail sur l'unité (11) d'affichage.

4. Analyseur automatique (1 ; 1A) selon la revendication 1, dans lequel, comme le guide, l'unité (80 ; 80A) de commande affiche une zone contextuelle (171) pour contrôler s'il convient ou non de passer à un écran pour effectuer le travail sur l'unité (11) d'affichage.

5. Analyseur automatique (1 ; 1A) selon la revendication 4, dans lequel, comme le guide, l'unité (80 ; 80A) de commande émet un son d'avertissement.

6. Analyseur automatique (1 ; 1A) selon la revendication 3, comprenant en outre :
une LED (22B, 23B, 31A, 33A, 34A, 35B, 36B) autour des mécanismes multiples,
dans lequel, comme le guide, l'unité (80 ; 80A) de commande allume ou fait clignoter la LED (22B, 23B, 31A, 33A, 34A, 35B, 36B) autour des mécanismes multiples pour être une cible du travail.

7. Analyseur automatique (1 ; 1A) selon la revendication 1, comprenant en outre :
une unité (82) de gestion de quantité résiduelle qui gère une quantité résiduelle des consommables,
dans lequel, lorsqu'il est détecté par l'unité (82) de gestion de quantité résiduelle qu'une quantité des consommables est inférieure à une valeur prédéterminée, l'unité (80 ; 80A) de commande met en surbrillance une zone correspondant à l'unité (33-36) de stockage de consommables cible de l'écran (141) de gestion de consommables.

8. Analyseur automatique (1 ; 1A) selon la revendication 1, comprenant en outre :
une unité (31, 32) de stockage de déchet qui stocke un déchet utilisé pour l'analyse,
dans lequel, lorsqu'il est détecté par le deuxième capteur (21a) que le capot principal (21 ; 21A) est ouvert, l'unité (80 ; 80A) de commande affiche un écran (141) de gestion de déchet comme le guide.

9. Analyseur automatique (1 ; 1A) selon la revendication 8, comprenant en outre :
une unité (82) de gestion de quantité résiduelle qui gère une marge de stockage du déchet,
dans lequel, lorsqu'il est détecté par l'unité (82) de gestion de quantité résiduelle qu'une quantité du déchet est supérieure à une valeur prédéterminée, l'unité (80 ; 80A) de commande met en surbrillance une zone correspondant à l'unité (31, 32) de stockage de déchet cible de l'écran (141) de gestion de déchet.

10. Analyseur automatique (1 ; 1A) selon la revendication 1, comprenant en outre :
un disque (42) pour échantillon qui contient un récipient pour échantillon où l'échantillon est reçu ; et
un capot (23) pour échantillon qui recouvre le disque (42) pour échantillon,
dans lequel, lorsque le capot (23) pour échantillon est ouvert et fermé, l'unité (80 ; 80A) de commande affiche un écran (161) d'enregistrement d'échantillon pour enregistrer l'échantillon.

11. Procédé de guidage dans un analyseur automatique (1 ; 1A) incluant des mécanismes multiples qui incluent un disque (41) pour réactif contenant un récipient pour réactif où un réactif est reçu et qui sont utilisés pour une analyse d'un échantillon, une unité (33-36) de stockage de consommables qui stocke des consommables requis pour l'analyse, un capot (22) pour réactif qui recouvre le disque (41) pour réactif, un capot principal (21 ; 21A) qui recouvre les mécanismes multiples, l'unité (33-36) de stockage de consommables et le capot (22) pour réactif, une unité (21a, 22a, 23a) de détection incluant un deuxième capteur (21a) qui détecte l'ouverture et la fermeture du capot principal (21 ; 21A) et un premier capteur (22a) qui détecte l'ouverture et la fermeture du capot (22) pour réactif, une unité (11) d'affichage qui affiche des informations relatives à l'analyseur automatique (1 ; 1A) pour un utilisateur, et une unité (80 ; 80A) de commande qui commande un fonctionnement des mécanismes multiples et affiche les informations sur l'unité (11) d'affichage, le capot (22) pour réactif étant une structure qui est impossible à ouvrir lorsque le capot principal (21 ; 21A) n'est pas ouvert, le procédé de guidage comprenant :
l'amenée de l'unité (11) d'affichage à afficher un écran (141) de gestion de consommables pour enregistrer le réactif comme un guide qui invite l'utilisateur à effectuer un travail nécessaire pour l'analyse lorsqu'il est détecté par le deuxième capteur (21a) que le capot principal (21 ; 21A) est ouvert, et à afficher l'écran (141) de gestion de consommables et un écran (151) d'enregistrement de réactif lorsqu'il est détecté par le deuxième capteur (21a) que le capot principal (21 ; 21A) est ouvert et par le premier capteur (22a) que le capot (22) pour réactif est ouvert.
